# EUROPÄISCHE PATENTSCHRIFT

(11) **EP 3 248 463 B1**
(45) Veröffentlichungstag und Bekanntmachung des Hinweises auf die Patenterteilung: **13.09.2023**
(21) Anmeldenummer: 17401051.2
(22) Anmeldetag: 19.05.2017
(51) Int. Cl.: A01M 7/00

(54) **SPRITZEINRICHTUNG, VERFAHREN UND VERWENDUNG EINES SENSORMODULS**
SPRAYER DEVICE, METHOD AND USE OF A SENSOR MODULE
DISPOSITIF DE PULVÉRISATION, PROCÉDÉ ET UTILISATION D'UN MODULE DE CAPTEUR

(30) Priorität: 23.05.2016 DE 102016109407
(43) Veröffentlichungstag der Anmeldung: 29.11.2017
(73) Patentinhaber: Amazonen-Werke H. Dreyer SE & Co. KG, 49205 Hasbergen (DE)
(72) Erfinder: Johannaber, Stefan Jan, 49536 Lienen (DE); Austermann, Stefan, 48291 Telgte (DE); Wessels, Thomas, 49080 Osnabrück (DE)

(56) Entgegenhaltungen:
- EP-A1- 2 944 173
- WO-A2-2004/081499
- DE-A1-102007 008 787
- GB-A- 2 260 682

## Beschreibung

Die Erfindung betrifft eine Spritzeinrichtung gemäß dem Oberbegriff des Anspruchs 1. Des Weiteren betrifft die Erfindung ein Verfahren zur Überwachung der aus der wenigstens einen Spritzdüse einer Spritzeinrichtung austretenden Spritzflüssigkeit gemäß dem Oberbegriff des Anspruchs 8. Schließlich betrifft die Erfindung die Verwendung eines Sensormoduls zur Überwachung der aus wenigstens einer Spritzdüse einer Spritzeinrichtung zum Versprühen von Flüssigkeiten, insbesondere für landwirtschaftliche Zwecke, als sogenanntem Spritzfächer austretenden Spritzflüssigkeit gemäß Anspruch 13
In der DE 10 2007 008787 A1 wird bereits eine solche Spritzeinrichtung zur visuellen Überwachung eines Spritzfächers beschrieben. Hier wird die Spritzflüssigkeit bzw. der Spritzfächer beleuchtet, damit der Landwirt im Dunklen den Spritzfächer gut erkennen kann. Es kann alternativ ein Sensor vorgesehen werden, um die reflektierten Lichtstrahlen zu detektieren.

Die EP 2 944 173 A1 beschreibt einen Düngerstreuer, der keine Flüssigkeit wie eine Spritzeinrichtung, sondern festen Dünger über eine Schleuderscheibe austrägt.

Die hier in Rede stehenden Spritzeinrichtungen dienen dazu, Flüssigkeiten auf Flächen auszubringen, insbesondere zu verspritzen. Diese Flüssigkeiten werden daher auch als Spritzflüssigkeiten bezeichnet. Es ist insbesondere vorgesehen, eine Trägerflüssigkeit mit wenigstens einem Wirkstoff zu versetzen. Die so gebildete Spritzflüssigkeit kann auf die vorgesehenen Flächen ausgebracht werden. Primär werden solche Spritzeinrichtungen in landwirtschaftlichen Bereichen eingesetzt, beispielsweise für Düngung, Schädlingsbekämpfung und ähnliches, insbesondere als sogenannte Feldspritze. Sie lassen sich aber auch in anderen technischen Gebieten verwenden.

Eine derartige Spritzeinrichtung weist wenigstens eine Spritzdüse zum Versprühen einer Spritzflüssigkeit, insbesondere Wasser, auf. Die Spritzflüssigkeit oder auch Trägerflüssigkeit kann mit wenigstens einem Wirkstoff versetzt sein, dem eigentlichen Spritzmittel. Vorzugsweise ist zum Versprühen eine Vielzahl von Spritzdüsen vorhanden. Diese können beispielsweise, wie im Falle einer landwirtschaftlichen Feldspritze, entlang wenigstens eines, gegebenenfalls faltbaren Auslegers verteilt angeordnet sein, typischerweise in regelmäßigen Abständen. Jede der Spritzdüsen bildet beim Austreten der Spritzflüssigkeit einen sogenannten Spritzfächer aus. Form und Profil des Spritzfächers sind dabei abhängig einerseits von der verwendeten Düse und andererseits von weiteren Parametern, wie beispielsweise Druck und Viskosität der Flüssigkeit.

Nachteilig an den bekannten Spritzeinrichtungen ist, dass fehlerhafte Spritzfächer und andere Fehlfunktionen der Spritzdüsen, beispielsweise defekte oder zumindest teilweise verstopfte Spritzdüsen, nicht oder zumindest nicht automatisch detektiert werden können. Der Bediener der Spritzeinrichtung kann folglich weder benachrichtigt werden, noch kann er Abhilfe schaffen.

Bisher kann die korrekte Funktion der Düsen allenfalls durch stichprobenartige visuelle Kontrolle der Spritzfächer durch den Bediener festgestellt werden.

Diese visuelle Überwachung wird durch die oben genannte DE 10 2007 008 787 A1 bekannte separate Beleuchtung der Spritzfächer allenfalls erleichtert. Die Überwachung muss aber während des Ausbringens und damit während der Fahrt erfolgen, vorzugsweise bei Dunkelheit. Bei einer manuellen Kontrolle der Funktion der Spritzdüsen im Stillstand würde lokal eine zu große Konzentration des Spritzmittels abgegeben. Allerdings kann in nicht einsehbaren Bereichen, beispielsweise hinter der Spritzeinrichtung, gar keine visuelle Kontrolle erfolgen. Eine Überwachung kann auch anhand von Parametern des Spritzflüssigkeitskreislaufs erfolgen, wie beispielsweise Druck und/oder Durchfluss. Damit kann aber nur eine indirekte und sehr allgemeine Fehlerfeststellung erfolgen, ohne konkrete Hinweise auf die Fehlerstelle zu erhalten.

Die Aufgabe der Erfindung besteht darin, die beschriebenen Nachteile des Standes der Technik zu beseitigen. Insbesondere soll eine automatische Überwachung der Funktion der Spritzdüsen beziehungsweise der Spritzfächer ermöglicht werden, insbesondere einzelner Spritzdüsen beziehungsweise Spritzfächer.

Erfindungsgemäß wird diese Aufgabe durch die Merkmale der Ansprüche 1, 8 und 13 gelöst.

Demnach ist eine Überwachung der aus der wenigstens einen Spritzdüse austretenden Spritzflüssigkeit als Spritzfächer per Radar vorgesehen. Damit wird auch die den Spritzfächer produzierende Spritzdüse selber überwacht. Bei Radar, kurz für "RAdio Detection And Ranging", handelt es sich um eine berührungslose Messtechnik zur Erfassung von Objekten, die mittels elektromagnetischer Strahlung arbeitet. Dabei werden mittels eines Senders elektromagnetische Wellen, typischerweise aus dem Bereich der Funkwellen und/oder Mikrowellen, ausgesendet, die von dem im Interesse stehenden Gegenstand reflektiert und dann mittels eines Empfängers detektiert werden können. Erfindungsgemäß wurde hierzu festgestellt, dass dies tatsächlich auch auf die zu verspritzenden Trägerflüssigkeiten zutreffen kann, so dass der Spritzfächer mittels Radar überwacht werden kann.

Vorzugsweise ist eine Überwachung per Radar zumindest derjenigen Spritzfächer vorgesehen, die vom Bediener nicht unmittelbar einsehbar sind. Dies trifft insbesondere auf diejenigen Spritzdüsen zu, die beispielsweise im Bereich hinter Teilen der Spritzeinrichtung angeordnet sind, so dass sie vom Fahrzeug des Bedieners aus nicht einsehbar sind. Durch eine Überwachung per Radar können auch diese nicht direkt sichtbaren Spritzdüsen überwacht werden, beispielsweise ergänzend zur visuellen Überwachung der übrigen sichtbaren Spritzdüsen. Im Falle einer Fehlfunktion kann eine Meldung an den Bediener erfolgen, so dass dieser sich um eine Fehlerbehebung kümmern kann.

Zur Überwachung des wenigstens einen Spritzfächers ist erfindungsgemäss wenigstens ein Radarsensor vorgesehen. Ein Radarsensor integriert üblicherweise die Funktionen des Senders und des Empfängers der elektromagnetischen Strahlung in einem Gerät. Dabei sind Sender und Empfänger aufeinander abgestimmt. Dies gilt idealerweise sowohl in Bezug auf die Frequenzbereiche als auch beispielsweise die jeweilige Richtcharakteristik von Sender und Empfänger. Zusätzlich ist noch zugehörige Elektronik verbaut. Somit dient ein einziges Gerät zur Überwachung. Alternativ können Sensor und Empfänger aber auch als separate Komponenten ausgebildet sein. Diese können dann lediglich messtechnisch aufeinander abgestimmt sein.

Insbesondere ist für mehrere der Spritzfächer ein gemeinsamer Radarsensor vorgesehen.

Dies ist besonders vorteilhaft bei benachbarten Spritzfächern. Die Spritzfächer mehrerer in räumlicher Nähe angeordneter Spritzdüsen sind häufig zumindest teilweise deckungsgleich. Sie lassen sich daher grundsätzlich mit einem einzigen Radarsensor überwachen, da sie in dessen Arbeitsbereich liegen. Dies ist allerdings abhängig von der Richtcharakteristik des jeweiligen Radar-sensors. So lässt sich die Anzahl der erforderlichen Sensoren sinnvoll begrenzen, vor allem im Hinblick auf Kostengründe. Typischerweise können die hier eingesetzten Radarsensoren kegelförmige oder kreissegmentartige Arbeitsbereiche überdecken.

Besonders bevorzugt ist jedem Spritzfächer ein separater Radarsensor zugeordnet. Damit kann einerseits eine separate Überwachung und andererseits eine genaue Zuordnung eines Sensors zu einem Spritzfächer sichergestellt werden. Auch kann so eine jederzeitige und/oder kontinuierliche Messung ermöglicht werden.

Wenigstens einer der Radarsensoren kann beweglich gelagert sein. Damit kann einerseits eine genaue Einstellung des Arbeitsbereiches des Sensors auf den zu überwachenden Spritzfächer erfolgen. Andererseits ist es auch möglich, benachbarte Spritzfächer mit einem einzigen Sensor zu überwachen, auch wenn der Abstand der Spritzfächer für den Arbeitsbereich eines fest installierten Sensors zu groß ist. Vorzugsweise ist der wenigstens eine bewegbare Radarsensor verfahrbar und/oder verschwenkbar ausgebildet, vorzugsweise motorisch. Eine Verfahrbarkeit kann beispielsweise entlang einer Schiene, einer Bahn oder ähnlichen vorgesehen sein. Ein Verschwenken kann insbesondere um eine Drehachse oder Schwenkachse vorgenommen werden. Es kann insbesondere wenigstens ein motorischer Antrieb und/oder auch ein Antrieb durch wenigstens einen Mitnehmer vorgesehen sein, um die Bewegung des Sensors zu ermöglichen. Der Antrieb kann beispielsweise über die Räder der Spritzeinrichtung beziehungsweise den Antrieb der Pumpeinrichtung erfolgen. Insbesondere kann auch der Flüssigkeitsdruck der Spritzflüssigkeit für den Antrieb genutzt werden, also insbesondere für eine Verstellung, ein Verfahren beziehungsweise ein Verschwenken des wenigstens einen Sensors. Als motorische Antriebe kommen beispielsweise Elektromotoren, Hydraulikmotoren, Pneumatikmotoren und ähnliches in Betracht.

Erfindungsgemäss sind die gemäß Anspruch 13 verwendeten Sensormodule mit wenigstens einem Radarsensor, vorzugsweise mehreren Radarsensoren, ausgebildet. Die Sensormodule sind zur Überwachung zusätzlicher Spritzfächer miteinander koppelbar. Diese Kopplung kann einerseits auf mechanischem Wege erfolgen, also durch mechanisch miteinander korrespondierende Elemente. Des Weiteren kann sie auf elektronischem Wege erfolgen, vorzugsweise mittels eines elektronischen Bussystems, wie CAN-Bus oder ähnlichem. Beide Kopplungsarten sind unabhängig voneinander einsetzbar oder auch kombinierbar. Damit wird erreicht, dass die Zahl der verwendeten Sensoren an einer Spritzeinrichtung variabel gewählt werden kann. Ein Nachrüsten oder Austauschen einzelner Sensormodule wird so ermöglicht.

Besonders bevorzugt erfolgt eine separate Überwachung der Spritzfächer jeder einzelnen Spritzdüse, zumindest jeder Mehrfachdüse beziehungsweise Spritzdüseneinheit. Als Mehrfachdüse werden in diesem Fall mehrere direkt benachbarte Spritzdüsen angesehen, die zu einer Einheit zusammengefasst sind, beispielsweise zur Ausbringung unterschiedlicher Spritzmittel. Diese alternativ zueinander oder ergänzend angesteuerten Spritzdüsen einer Mehrfachdüse können gemeinsam überwacht werden.

Die eingangs geschilderte Aufgabe wird außerdem gelöst durch ein Verfahren mit den Merkmalen des Anspruchs 8. Das Verfahren betrifft die Überwachung der aus wenigstens einen Spritzdüse, vorzugsweise einer Vielzahl von Spritzdüsen, einer Spritzeinrichtung, insbesondere für landwirtschaftliche Zwecke, austretenden Spritzflüssigkeit, insbesondere Wasser, wobei die Spritzflüssigkeit oder auch Trägerflüssigkeit mit wenigstens einem Wirkstoff versetzt sein kann. Dabei wird die aus der wenigstens einen Spritzdüse austretende Spritzflüssigkeit als Spritzfächer erfindungsgemäß mittels Radar überwacht. Radar ermöglicht eine berührungsfreie Überwachung der Spritzfächer. Das Verfahren kann insbesondere mittels einer Spritzeinrichtung gemäß den obigen Beschreibungen durchgeführt werden.

Erfindungsgemäss wird der wenigstens eine Spritzfächer mittels wenigstens eines Radarsensors überwacht. Ein Radarsensor wird üblicherweise als Einheit aus Radarsender und zugehörigem Radarempfänger gebildet, also insbesondere in einem Gerät. Der Radarsensor kann aber auch aus mehreren separaten Teilen oder Komponenten bestehen, also insbesondere separatem Radarsender und Radarempfänger. Die Überwachung kann insbesondere auf Existenz des Spritzfächers, dessen Form, der Verteilung der Flüssigkeitsstrahlen, der Ausbringmenge der Spritzflüssigkeit und ähnlichem erfolgen.

Es können insbesondere mehrere der Spritzfächer mittels eines gemeinsamen Radarsensors überwacht werden. Der Radarsensor wird vorzugsweise zur Überwachung unterschiedlicher Spritzdüsen bewegt. Insbesondere kann der Radarsensor verschwenkt und/oder verfahren werden. Damit kann die Ausrichtung des Sensors zur Überwachung des jeweiligen Spritzfächers an diesen angepasst werden. Gleichermaßen kann auch eine gezielte Auswahl einzelner Spritzfächer aus mehreren Spritzfächern erfolgen, die dann mittels eines oder mehrerer Sensoren überwacht werden können. So kann die Gesamtzahl der Sensoren reduziert werden.

Besonders bevorzugt wird jeder Spritzfächer mit einem separaten Radarsensor überwacht. In diesem Fall ist eine eindeutige Zuordnung eines Sensors zu einer Spritzdüse beziehungsweise einem Spritzfächer vorgesehen. Damit kann durch die exklusive Zuordnung jederzeit eine Messung des Spritzfächers per Radarsensor erfolgen. Schließlich ist eine eindeutige Rückmeldung zu einzelnen Spritzdüsen beziehungsweise Spritzfächern möglich.

Verschiedene Parameter des Spritzfächers können vorzugsweise überwacht werden. Dabei handelt es sich insbesondere um die aus der Spritzdüse austretende Flüssigkeit beziehungsweise die austretenden Flüssigkeitsstrahlen oder Flüssigkeitstropfen. Weiter vorzugsweise kann es sich zumindest um die Verteilung der Geschwindigkeiten, die räumliche Verteilung und/oder den Verlauf der Flugbahnen der ausgestoßenen Flüssigkeit, vorzugsweise der Flüssigkeitsstrahlen oder Flüssigkeitstropfen, handeln. Damit lassen sich Rückschlüsse auf verschiedene Parameter des Spritzvorgangs ziehen. Gegebenenfalls können auch Hinweise auf Art und Konzentration des ausgebrachten Spritzmittels erhalten werden.

Die Parameter der Radarsignale des wenigstens einen Radarsensors werden zur Überwachung der Funktion der wenigstens einen Spritzdüse und/oder der Ausbringung der Spritzflüssigkeit ausgewertet. Dies erfolgt erfindungsgemäss mittels einer elektronischen Auswerteeinheit beziehungsweise vorzugsweise eines Computers. Dabei werden erfindungsgemäss die Dopplerfrequenz und/ oder die Amplitude, und vorzugsweise weitere relevante Mess- und/oder Kurvenparameter, berücksichtigt. Auch kann eine frequenzaufgelöste Auswertung bezüglich Flüssigkeitsmenge und Geschwindigkeit erfolgen, insbesondere mittels Fouriertransformation, vorzugsweise FFT (fast fourier transformation).

Es ist außerdem wenigstens ein Radarsensor zur Überwachung der Parameter des Spritzfächers vorgesehen, insbesondere der aus der Spritzdüse austretenden Flüssigkeit beziehungsweise der austretenden Flüssigkeitsstrahlen oder Flüssigkeitstropfen. Dabei werden vorzugsweise Parameter, wie die Verteilung der Geschwindigkeiten, die räumliche Verteilung der Spritzflüssigkeit und/oder der Verlauf der Flugbahnen von Flüssigkeitstropfen berücksichtigt. Das Sensormodul weist im Übrigen vorzugsweise die weiter oben beschriebenen erfindungsgemäßen Eigenschaften auf.

Bevorzugte Ausführungsbeispiele der Erfindung werden im Folgenden anhand der Zeichnung näher beschrieben. In dieser zeigen:
- Fig. 1: eine perspektivische Darstellung einer erfindungsgemäßen Spritzeinrichtung in Form einer Feldspritze an einem Zugfahrzeug,
- Fig. 2: als erstes Ausführungsbeispiel eine erfindungsgemäße Spritzeinrichtung in einer Darstellung ähnlich zu Fig. 1 im Betriebszustand,
- Fig. 3: eine Detaildarstellung zweier Spritzdüsen gemäß Ausschnitt (A) der Fig. 2,
- Fig. 4: eine weitere Detaildarstellung zweier Spritzdüsen gemäß Ausschnitt (B) der Fig. 2,
- Fig. 5: als zweites Ausführungsbeispiel eine erfindungsgemäße Spritzeinrichtung in einer Darstellung ähnlich zu Fig. 1 im Betriebszustand,
- Fig. 6: eine Detaildarstellung zweier Spritzdüsen gemäß Ausschnitt (C) der Fig. 5,
- Fig. 7: eine weitere Detaildarstellung zweier Spritzdüsen gemäß Ausschnitt (D) der Fig. 5,
- Fig. 8: eine Detaildarstellung einer Spritzdüse mit einem intakten Spritzfächer,
- Fig. 9: die Spritzdüse der Fig. 8 mit einem fehlerhaften Spritzfächer, und
- Fig. 10: ein Diagramm mit zwei Messwertkurven entsprechend den Spritzfächern der Fig. 8 beziehungsweise Fig. 9.

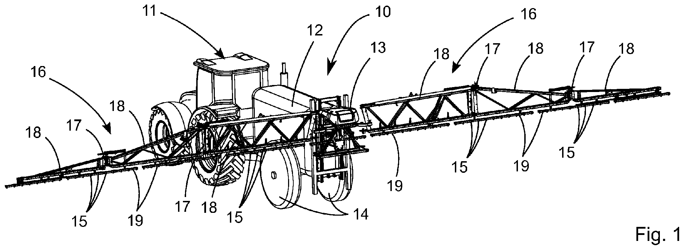

Die Fig. 1 zeigt eine erfindungsgemäße Spritzeinrichtung 10, die an ein Zugfahrzeug 11 angehängt ist.

Bei der Spritzeinrichtung 10 handelt es sich um eine sogenannte Feldspritze, die für landwirtschaftliche Zwecke eingesetzt wird. Das hier gezeigte Modell weist einen Tank 12 zur Bevorratung der zu verspritzenden Trägerflüssigkeit beziehungsweise Spritzflüssigkeit und eine Pumpeinrichtung zur Förderung derselben auf. Ein Paar Räder 14 dient in diesem Fall zur Abstützung der Spritzeinrichtung 10 auf dem Untergrund, wie beispielsweise einem Feld. Diese können gegebenenfalls auch entfallen, wenn die Spritzeinrichtung 10 als angebaute Feldspritze ausgeführt ist.

Die Spritzflüssigkeit kann dabei aus einer Trägerflüssigkeit gebildet sein, die mit wenigstens einem Wirkstoff versetzt ist. Die Spritzflüssigkeit oder Trägerflüssigkeit kann dazu im Tank 12 oder auch an anderer Stelle der Spritzeinrichtung 10 mit einem Spritzmittel versetzt sein, beispielsweise einem landwirtschaftlichen Dünger oder einem anderen Wirkstoff. Zur Ausbringung der Trägerflüssigkeit auf der Fläche, wie beispielsweise einem Acker oder Feld, ist eine Vielzahl von Spritzdüsen 15 an einem Ausleger 16 verteilt angeordnet. Dieser Ausleger 16 kann gegebenenfalls, wie im vorliegenden Fall, aus mehreren Segmenten 18 bestehen, die an verschiedenen Gelenken 17 zusammenfaltbar ausgebildet sind. In diesem Fall ist in üblicher Weise jeweils ein Arm des Auslegers 16 je Seite der Spritzeinrichtung 10 angeordnet.

Mittels hier nicht im Detail dargestellter Flüssigkeitsleitungen wird die Spritzflüssigkeit mittels der Pumpeinrichtung aus dem Tank 12 zu den jeweiligen Spritzdüsen 15 transportiert. Um eine separate Ansteuerung der Spritzdüsen 15 zu ermöglichen, können jeweils Ventile 13 zum Freigeben oder Unterbrechen der Flüssigkeitszufuhr zu einer einzelnen Spritzdüse 15 oder zu mehreren Spritzdüsen 15 vorgesehen sein.

Die Spritzdüsen 15 sind im vorliegenden Fall jeweils in Gruppen an Tragbalken 19 am Ausleger 16 angeordnet. Gegebenenfalls können diese Tragbalken 19 nicht nur zum Befestigen der Spritzdüsen 15 dienen, sondern auch die Flüssigkeitszufuhr für mehrere Spritzdüsen 15 enthalten.

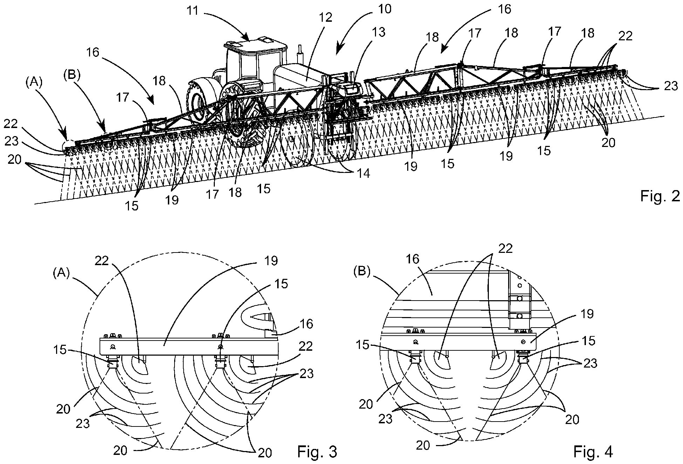

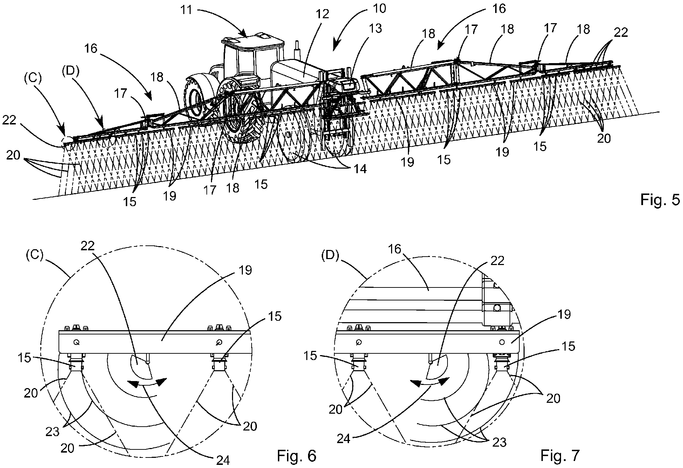

Die beiden in den Fig. 2 und 5 gezeigten Ausführungsbeispiele der Erfindung zeigen jeweils die Spritzeinrichtung 10 in Betrieb. Dies bedeutet, dass jede der aktivierten Spritzdüsen 15 in diesem Fall einen eigenen sogenannten Spritzfächer 20 ausbildet. Bei einem Spritzfächer 20 handelt es sich um die aus der Spritzdüse 15 austretende Trägerflüssigkeit oder Spritzflüssigkeit, die in einem gewissen Raumbereich um die Düse 15 herum ausgebracht wird.

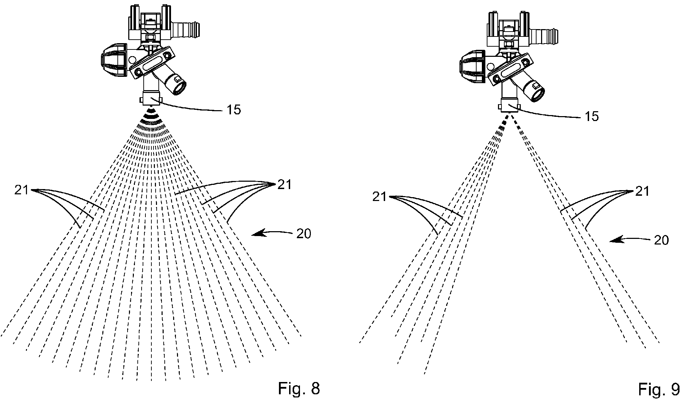

Die Form und der Überdeckungsbereich des Spritzfächers 20 werden dabei primär durch die Spritzdüse 15 definiert. Aber auch der anliegende Flüssigkeitsdruck spielt eine Rolle. Die hier gezeigten Spritzfächer 20 sind im Wesentlichen als ebene kreissegmentartige beziehungsweise fächerartige Spritzmuster ausgebildet. Dies ist insbesondere in der Fig. 8 dargestellt, die einen intakten Spritzfächer 20 zeigt. Der Spritzfächer 20 besteht dabei aus einer Vielzahl einzelner Flüssigkeitsstrahlen 21, die zusammengenommen für eine Abdeckung eines gewissen Raumbereiches sorgen. Die Darstellung zeigt eine Verteilung in der Ebene, wohingegen praktisch zumindest eine teilweise räumliche Komponente zum Tragen kommt.

Die Kombination vieler nebeneinander angeordneter Spritzdüsen 15 sorgt dabei dafür, dass auf der gesamten Breite des Auslegers 16 ein gleichmäßiges Spritzbild durch das Nebeneinander beziehungsweise Überlappen der Spritzfächer 20 erreicht werden kann. Dies setzt jedoch voraus, dass alle Spritzdüsen 15 wie vorgesehen funktionieren. Sobald einzelne Düsen 15 Ausfallerscheinungen zeigen, beispielsweise durch eine zumindest teilweise Verstopfung oder einen Defekt, wird das gleichmäßige Spritzbild beeinträchtigt. Dann erfolgt keine homogene Verteilung auf dem Boden.

Ein derartiger defekter Spritzfächer 20 ist in der Fig. 9 dargestellt. Mehrere Flüssigkeits-strahlen 21 fehlen vollständig, wobei einzelne andere Strahlen in Richtung oder Stärke beeinträchtigt sind. Dies führt dann zu einem inhomogenen Ausbringen der Spritzflüssigkeit und damit auch der darin enthaltenen Wirkstoffe. Im Hinblick auf optimale Ergebnisse beim Ausbingen der Spritzflüssigkeit sind derartige Inhomogenitäten möglichst zu vermeiden.

Die erfindungsgemäße Lösung besteht darin, eine Überwachung der einzelnen Spritzfächer 20 mittels Radar vorzusehen. Hierzu sind Radarsensoren 22 vorgesehen. Die Radarsensoren 22 sind in der Lage, von den Spritzfächern 20 beziehungsweise den einzelnen Flüssigkeitsstrahlen 21 reflektierte Radarstrahlung 23 zu detektieren. Die Radarstrahlung 23 wird dabei typischerweise von dem Radarsensor 22 in geeigneter Weise ausgesendet mittels eines entsprechenden Senders. Der Sender ist typischerweise der Einfachheit halber zusammen mit einem zugehörigen Empfänger in das Gehäuse des Radarsensors 22 integriert, kann aber auch als separate Einheit ausgebildet sein.

Aufgrund der erhaltenen Messwerte der Radarmessung können dann Rückschlüsse auf die Form des Spritzfächers 20, die Geschwindigkeit des Austritts der einzelnen Flüssigkeitsstrahlen 21 und auch die räumliche Verteilung der Flüssigkeitsstrahlen 21 gezogen werden. Die entsprechende Messdatenaufnahme und Berechnung erfolgt mittels einer entsprechenden elektronischen Steuerung beziehungsweise eines Computers. Die Steuerung kann beispielsweise durch wenigstens ein Steuergerät und/oder einen Jobrechner oder ähnliches erfolgen. Diese können beispielsweise an der Spritzeinrichtung 10, am Zugfahrzeug 11 oder auch an beiden angeordnet sein.

Abhängig von der Detektierung fehlerhafter Düsen 15 beziehungsweise Fächer 20 kann eine Benachrichtigung des Bedieners der Spritzeinrichtung 10 beziehungsweise des Fahrers des Zugfahrzeugs 11 erfolgen. Entsprechende Benachrichtigungen lassen sich auf einfache Weise implementieren, beispielsweise als optische, akustische, haptische oder andere Benachrichtigungen.

Im Ausführungsbeispiel der Fig. 2 bis 4 ist eine Anordnung je eines separaten Radar-sensors 22 je Spritzfächer 20 beziehungsweise je Spritzdüse 15 gezeigt. Auf diese Weise wird eine Einzelüberwachung der Spritzfächer 20 ermöglicht.

In der Fig. 3 ist hierzu eine Anordnung der Radarsensoren 22 jeweils auf der in der Zeichnungsebene rechten Seite der Spritzdüsen 15 vorgesehen. Die Ausbreitungsrichtung der Radarstrahlung 23 ist durch konzentrische Kreisbogenabschnitte skizziert. Der Radarsensor 22 empfängt die Anteile der von ihm ausgesendeten Radarstrahlung 23, die von den Flüssigkeitsstrahlen 21 beziehungsweise den einzelnen Flüssigkeitströpfchen des Spritzfächers 20 reflektiert werden. Die Messwerte lassen dann Rückschlüsse auf die Form und Ausbildung des Spritzfächers 20 zu. Damit erfolgt eine separate Messung jedes einzelnen Spritzfächers 20. In der Fig. 4 ist alternativ eine abwechselnde Anordnung und Ausrichtung der Radarsensoren 22 in der Zeichnungsebene links beziehungsweise rechts der benachbarten Spritzdüsen 15 gezeigt.

Gegebenenfalls lassen sich auch mehrere an einer Position angeordnete Spritzdüsen 15 überwachen. Beispielsweise, wenn die hier gezeigten Spritzdüsen 15 durch eine Kombination aus mehreren einzelnen Spritzdüsen 15 ersetzt werden, wie insbesondere als Mehrfachdüse, ist die Position des Spritzfächers 20 praktisch dieselbe. Somit kann ein einzelner Radarsensor 22 zur Überwachung mehrerer, an einem Ort angeordneter Spritzdüsen 15 dienen. Gegebenenfalls müssen leichte Korrekturen bei der Auswertung unterschiedlicher Düsen 15 aufgrund der leichten räumlichen Abweichungen vorgenommen werden.

Das zweite Ausführungsbeispiel gemäß den Fig. 5 bis 7 zeigt bewegliche Radarsensoren 22. Diese sind, wie durch Pfeile 24 skizziert ist, jeweils in einem Verschwenkbereich beweglich angeordnet.

Die Fig. 6 zeigt einen in der Zeichnungsebene nach links verschwenkten Radarsensor 22, während die Fig. 7 einen anderen, in diesem Fall in der Zeichnungsebene nach rechts verschwenkten Radarsensor 22 zeigt. Da die Radarsensoren 22 in diesem Fall in etwa in der Mitte zwischen zwei Spritzdüsen 15 und den dazugehörigen Spritzfächern 20 angeordnet sind, lassen sich damit die beiden benachbarten Spritzfächer 20 überwachen. Da ein Verschwenken zwischen den beiden Verschwenkpositionen erforderlich ist, um den jeweils anderen Spritzfächer 20 adressieren zu können, kann die Überwachung der benachbarten Spritzdüsen 15 selbstverständlich lediglich alternierend erfolgen.

Das Verschwenken kann beispielsweise durch motorische Antriebe erfolgen. Dabei kann ein separater oder auch ein zentraler Antrieb beziehungsweise auch eine Mischform vorgesehen sein. Gegebenenfalls kann auch anstatt eines motorischen Antriebs ein an den Vortrieb der Spritzeinrichtung 10 gekoppeltes Verschwenken, beispielsweise über ein entsprechendes Gestänge, vorgesehen sein. Auch der Flüssigkeitsdruck kann für die Verstellung genutzt werden. In jedem Fall sollte dafür Sorge getragen werden, dass eine Zuordnung zwischen der aktuellen Verschwenkposition der Radarsensoren 22 und den entsprechenden beobachteten Spritzfächern 20 erfolgt, zumindest im Hinblick auf eine Fehlermeldung.

Alternativ zu der hier gezeigten Verschwenkbewegung kann auch ein Verfahren von Radarsensoren 22 entlang des Auslegers 16 vorgesehen sein. Hierzu können Schienensysteme, Seilzüge oder ähnliches vorgesehen sein. Dieses kann auch lediglich in den einzelnen, zwischen den Gelenken 17 des Auslegers 16 ausgebildeten Segmenten der Fall sein.

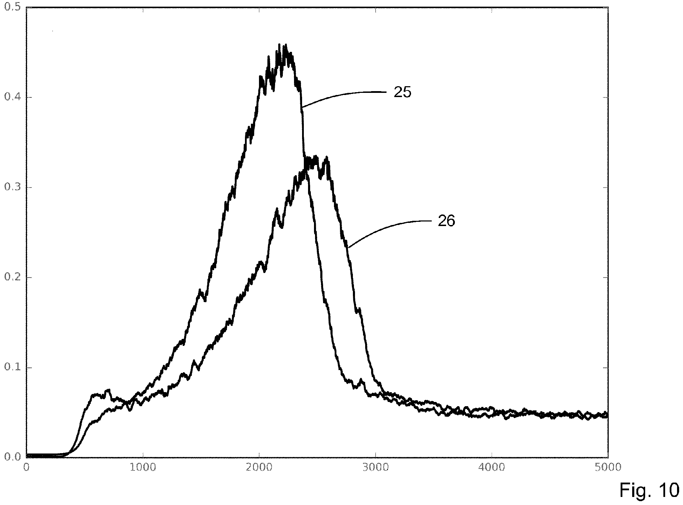

In der Fig. 10 ist schließlich noch ein Diagramm exemplarisch aufgenommener Messdaten für zwei verschiedene Zustände einer Spritzdüse 15 gezeigt.

Dabei zeigt die höhere und steilere Verlaufskurve 25 entsprechende Messdaten für einen intakten Spritzfächer 20 mit einer dementsprechend ebenso intakten Spritzdüse 15. Dies entspricht folglich im Wesentlichen dem Spritzfächer 20 der Fig. 8.

Die zweite, flachere Kurve 26 zeigt dagegen einen deutlichen Unterschied zur Kurve 25. Diese Kurve 26 ist für den Fall einer teilweise verstopften Spritzdüse 15 aufgenommen worden. Die Messung mit einem entsprechenden Radarsensor 22 ergibt einen deutlich vom der Kurve 25 einer intakten Spritzdüse 15 abweichenden Verlauf als Kurve 26. Die entsprechenden Abweichungen erklären sich unter anderem durch die höhere Austrittsgeschwindigkeit aufgrund des gestiegenen Druckes bei einer partiellen Verstopfung der Spritzdüse 15. In diesem konkreten Fall ergeben sich im Durchschnitt ein Amplitudenabfall und eine Frequenzerhöhung. Steigender Druck bei geringerem Querschnitt führt zu einer Geschwindigkeitserhöhung beim Austritt und damit zu höheren Frequenzen. Somit sind die hier in willkürlichen Einheiten aufgetragenen, gemessenen Werte in y-Richtung über der Geschwindigkeit beziehungsweise Frequenz der gemessenen Objekte in x-Richtung aufgetragen. Im Ergebnis erhält man damit eindeutige Hinweise auf ein Abweichen des Spritzfächers 20 vom optimalen Zustand bei zumindest teilweiser Verstopfung der Düse 15. Gegebenenfalls können auch noch quantitative Aussagen zur Ausbringrate und ähnlichem getroffen werden.

Die hier beschriebenen Ausführungsbeispiele oder Teilaspekte sind prinzipiell auch miteinander kombinierbar. So kann beispielsweise ein Teil der Radarsensoren 22 fest installiert sein und ein anderer Teil der Radarsensoren 22 verschwenkbar beziehungs-weise beweglich. Auch lassen sich auch lediglich Teilbereiche der Spritzeinrichtung 10 mit entsprechenden Radarsensoren 22 ausstatten. So kann beispielsweise vorzugsweise der Bereich hinter der Spritzeinrichtung 10 selber, also insbesondere der nicht einsehbare Bereich hinter dem Tank 12, mit entsprechenden Radarsensoren 22 versehen sein. So kann der Bediener beziehungsweise Fahrer des Zugfahrzeugs 11 von seinem Sitzplatz aus die nicht einsehbaren Spritzdüsen 15 per Radar kontrollieren, während er die übrigen Spritzdüsen 15 beispielsweise visuell überwachen kann. Auch können unterschiedliche Kombinationen dieser Lösungen vorgenommen werden.

### Bezugszeichenliste:

- 10: Spritzeinrichtung
- 11: Zugfahrzeug
- 12: Tank
- 13: Ventil
- 14: Rad
- 15: Spritzdüse
- 16: Ausleger
- 17: Gelenk
- 18: Segment
- 19: Tragbalken
- 20: Spritzfächer
- 21: Flüssigkeitsstrahl
- 22: Radarsensor
- 23: Radarstrahlung
- 24: Pfeil
- 25: Kurve
- 26: Kurve

## Patentansprüche

1. Spritzeinrichtung zum Versprühen von Flüssigkeiten, insbesondere für landwirtschaftliche Zwecke, mit wenigstens einer Spritzdüse (15), vorzugsweise einer Vielzahl von Spritzdüsen (15), zum Versprühen einer Spritzflüssigkeit, insbesondere Wasser, wobei die Spritzflüssigkeit als Trägerflüssigkeit mit wenigstens einem Wirkstoff versetzt werden kann, **dadurch gekennzeichnet, dass** eine Überwachung der als Spritzfächer (20) aus der wenigstens einen Spritzdüse (15) austretenden Spritzflüssigkeit per Radar mit wenigstens einem Radarsensor (22) vorgesehen ist, wobei Parameter der Radarsignale des wenigstens einen Radarsensors (22) zur Überwachung der Funktion der wenigstens einen Spritzdüse (15) und/oder der Ausbringung der Spritzflüssigkeit ausgewertet werden, mittels einer elektronischen Auswerteeinheit, wobei die Dopplerfrequenz und/oder die Amplitude berücksichtigt werden.

2. Spritzeinrichtung nach Anspruch 1, **dadurch gekennzeichnet, dass** eine Überwachung per Radar zumindest derjenigen Spritzfächer (20) vorgesehen ist, die vom Bediener nicht unmittelbar einsehbar sind.

3. Spritzeinrichtung nach einem der vorhergehenden Ansprüche, **dadurch gekennzeichnet, dass** für mehrere der Spritzfächer (20) ein gemeinsamer Radarsensor (22) vorgesehen ist, vorzugsweise für benachbarte Spritzfächer (20).

4. Spritzeinrichtung nach einem der vorhergehenden Ansprüche, **dadurch gekennzeichnet, dass** jedem Spritzfächer (20) ein separater Radarsensor (22) zugeordnet ist.

5. Spritzeinrichtung nach einem der vorhergehenden Ansprüche, **dadurch gekennzeichnet, dass** wenigstens einer der Radarsensoren (22) beweglich gelagert ist, vorzugsweise verfahrbar und/oder verschwenkbar, vorzugweise motorisch.

6. Spritzeinrichtung nach einem der vorhergehenden Ansprüche, **dadurch gekennzeichnet, dass** Sensormodule mit wenigstens einem Radarsensor (22), vorzugsweise mehreren Radarsensoren (22), ausgebildet sind, wobei die Sensormodule zur Überwachung zusätzlicher Spritzfächer (20) miteinander koppelbar sind, vorzugsweise mechanisch und/oder mittels eines elektronischen Bussystems.

7. Spritzeinrichtung nach einem der vorhergehenden Ansprüche, **dadurch gekennzeichnet, dass** eine separate Überwachung der Spritzfächer (20) jeder einzelnen Spritzdüse (15) oder zumindest der Spritzdüsen (15) einer Mehrfachdüse erfolgt.

8. Verfahren zur Überwachung der aus wenigstens einer Spritzdüse (15), vorzugsweise einer Vielzahl von Spritzdüsen (15), einer Spritzeinrichtung (10), vorzugsweise nach einem der vorgehergehenden Ansprüche, insbesondere für landwirtschaftliche Zwecke, austretenden Spritzflüssigkeit, insbesondere Wasser, wobei die Spritzflüssigkeit als Trägerflüssigkeit mit wenigstens einem Wirkstoff versetzt sein kann, **dadurch gekennzeichnet, dass** die als Spritzfächer (20) aus der wenigstens einen Spritzdüse (15) austretende Spritzflüssigkeit mittels Radar mittels wenigstens einem Radarsensor überwacht wird, wobei Parameter der Radarsignale des wenigstens einen Radarsensors (22) zur Überwachung der Funktion der wenigstens einen Spritzdüse (15) und/oder der Ausbringung der Spritzflüssigkeit ausgewertet werden, mittels einer elektronischen Auswerteeinheit, wobei die Dopplerfrequenz und/oder die Amplitude berücksichtigt werden.

9. Verfahren nach Anspruch 8, **dadurch gekennzeichnet, dass** der wenigstens eine Spritzfächer (15) mittels wenigstens eines Radarsensors (22) überwacht wird, insbesondere bezüglich der Existenz des Spritzfächers (15), dessen Form, der räumlichen Verteilung der Spritzflüssigkeit und/oder der Ausbringmenge.

10. Verfahren nach Anspruch 8, **dadurch gekennzeichnet, dass** mehrere der Spritzfächer (20) mittels eines gemeinsamen Radarsensors (22) überwacht werden, wobei der Radarsensor (22) zur Überwachung unterschiedlicher Spritzdüsen (15) vorzugsweise bewegt wird, insbesondere verschwenkt und/oder verfahren wird.

11. Verfahren nach einem der Ansprüche 8 oder 10, **dadurch gekennzeichnet, dass** jeder Spritzfächer (20) mit einem separaten Radarsensor (22) überwacht wird.

12. Verfahren nach einem der Ansprüche 8 bis 11, **dadurch gekennzeichnet, dass** Parameter des Spritzfächers (20), insbesondere der aus der Spritzdüse (15) austretenden Flüssigkeit beziehungsweise der austretenden Flüssigkeitstropfen, überwacht werden, vorzugsweise zumindest die Verteilung der Geschwindigkeiten, und/oder die räumliche Verteilung der Spritzflüssigkeit und/oder der Verlauf der Flugbahnen.

13. Verwendung eines Sensormoduls zur Überwachung der aus wenigstens einer Spritzdüse (15) einer Spritzeinrichtung (10) für landwirtschaftliche Zwecke, zum Versprühen von Flüssigkeiten als sogenanntem Spitzfächer (20) austretenden Spritzflüssigkeit, wobei das Sensormodul derart ausgebildet ist, dass Sensormodule miteinander koppelbar sind, vorzugsweise mechanisch und/oder mittels eines elektronischen Bussystems, und wobei wenigstens ein Radarsensor (22) zur Überwachung der Parameter des wenigstens einen Spritzfächers (20) vorgesehen ist, insbesondere der aus der Spritzdüse (15) austretenden Spritzflüssigkeit beziehungsweise der austretenden Flüssigkeitsstrahlen (21) und/oder Flüssigkeitstropfen, vorzugsweise zumindest der Verteilung der Geschwindigkeiten, und/oder der räumlichen Verteilung und/oder den Verlauf der Flugbahnen der Flüssigkeitsstrahlen (21) und/oder Flüssigkeitstropfen, wobei Parameter der Radarsignale des wenigstens einen Radarsensors (22) zur Überwachung der Funktion der wenigstens einen Spritzdüse (15) und/oder der Ausbringung der Spritzflüssigkeit ausgewertet werden, mittels einer elektronischen Auswerteeinheit, wobei die Dopplerfrequenz und/oder die Amplitude berücksichtigt werden.

## Claims

1. Spray device for spraying liquids, in particular for agricultural purposes, comprising at least one spray nozzle (15), preferably a plurality of spray nozzles (15), for spraying a spray liquid, in particular water, it being possible for the spray liquid, in the form of a carrier liquid, to be mixed with at least one active substance, **characterized in that** monitoring of the spray liquid emerging from the at least one spray nozzle (15) as a spray fan (20) is provided by radar using at least one radar sensor (22), parameters of the radar signals from the at least one radar sensor (22) for monitoring the performance of the at least one spray nozzle (15) and/or the spread of the spray liquid being evaluated by means of an electronic evaluation unit, the Doppler frequency and/or the amplitude being taken into account.

2. Spray device according to claim 1, **characterized in that** monitoring by radar of at least the spray fans (20) that cannot be seen directly by the operator is provided.

3. Spray device according to any of the preceding claims,
**characterized in that** a common radar sensor (22) is provided for a plurality of the spray fans (20), preferably for adjacent spray fans (20).

4. Spray device according to any of the preceding claims,
**characterized in that** a separate radar sensor (22) is assigned to each spray fan (20).

5. Spray device according to any of the preceding claims,
**characterized in that** at least one of the radar sensors (22) is movably mounted, preferably is displaceable and/or pivotable, preferably by motor.

6. Spray device according to any of the preceding claims,
**characterized in that** sensor modules are designed to have at least one radar sensor (22), preferably a plurality of radar sensors (22), it being possible for the sensor modules to be coupled to one another, preferably mechanically and/or by means of an electronic bus system, in order to monitor additional spray fans (20).

7. Spray device according to any of the preceding claims,
**characterized in that** separate monitoring of the spray fans (20) of each individual spray nozzle (15) or at least of the spray nozzles (15) of a multiple nozzle takes place.

8. Method for monitoring the spray liquid, in particular water, emerging from at least one spray nozzle (15), preferably a plurality of spray nozzles (15), of a spray device (10), preferably according to any of the preceding claims, in particular for agricultural purposes, it being possible for the spray liquid, in the form of a carrier liquid, to be mixed with at least one active substance,
**characterized in that** the spray liquid emerging from the at least one spray nozzle (15) as a spray fan (20) is monitored by radar using at least one radar sensor, parameters of the radar signals from the at least one radar sensor (22) for monitoring the performance of the at least one spray nozzle (15) and/or the spread of the spray liquid being evaluated by means of an electronic evaluation unit, the Doppler frequency and/or the amplitude being taken into account.

9. Method according to claim 8, **characterized in that** the at least one spray fan (15) is monitored using at least one radar sensor (22), in particular with respect to the existence of the spray fan (15), its shape, the spatial distribution of the spray liquid and/or the spread rate.

10. Method according to claim 8, **characterized in that** a plurality of the spray fans (20) are monitored using a common radar sensor (22), the radar sensor (22) preferably being moved, in particular pivoted and/or displaced, in order to monitor different spray nozzles (15).

11. Method according to either claim 8 or claim 10, **characterized in that** each spray fan (20) is monitored using a separate radar sensor (22).

12. Method according to any of claims 8 to 11, **characterized in that** parameters of the spray fan (20), in particular of the liquid emerging from the spray nozzle (15) or of the emerging liquid droplets, are monitored, preferably at least the distribution of the velocities, and/or the spatial distribution of the spray liquid and/or the course of the trajectories.

13. Use of a sensor module for monitoring the spray liquid emerging from at least one spray nozzle (15) of a spray device (10) for agricultural purposes, for spraying liquids in the form of what is referred to as a spray fan (20), wherein the sensor module is designed such that sensor modules can be coupled to one another, preferably mechanically and/or by means of an electronic bus system, and wherein at least one radar sensor (22) is provided for monitoring the parameters of the at least one spray fan (20), in particular the spray liquid emerging from the spray nozzle (15) or the emerging liquid jets (21) and/or liquid droplets, preferably at least the distribution of the velocities, and/or the spatial distribution and/or the course of the trajectories of the liquid jets (21) and/or liquid droplets, wherein parameters of the radar signals of the at least one radar sensor (22) for monitoring the performance of the at least one spray nozzle (15) and/or the spread of the spray liquid are evaluated by means of an electronic evaluation unit, wherein the Doppler frequency and/or the amplitude are taken into account.

## Revendications

1. Dispositif de pulvérisation pour la vaporisation de liquides, en particulier à des fins agricoles, comportant au moins une buse de pulvérisation (15), de préférence une pluralité de buses de pulvérisation (15), pour la vaporisation d'un liquide de pulvérisation, en particulier d'eau, le liquide de pulvérisation pouvant, en tant que liquide porteur, être mélangé avec au moins un agent actif,
**caractérisé en ce qu'**une surveillance du liquide de pulvérisation sorti sous forme de cône de pulvérisation (20) de l'au moins une buse de pulvérisation (15) au moyen d'un radar comportant au moins un capteur radar (22) est prévue, des paramètres des signaux radar de l'au moins un capteur radar (22) étant évalués pour la surveillance du fonctionnement de l'au moins une buse de pulvérisation (15) et/ou de l'épandage du liquide de pulvérisation, au moyen d'une unité d'évaluation électronique, la fréquence Doppler et/ou l'amplitude étant prises en compte.

2. Dispositif de pulvérisation selon la revendication 1,
**caractérisé en ce qu'**une surveillance par radar est prévue pour au moins des cônes de pulvérisation (20) qui ne sont pas directement visibles pour l'opérateur.

3. Dispositif de pulvérisation selon l'une des revendications précédentes, **caractérisé en ce qu'**un capteur radar (22) commun est prévu pour plusieurs des cônes de pulvérisation (20), de préférence pour des cônes de pulvérisation (20) adjacents.

4. Dispositif de pulvérisation selon l'une des revendications précédentes, **caractérisé en ce qu'**un capteur radar (22) séparé est associé à chaque cône de pulvérisation (20).

5. Dispositif de pulvérisation selon l'une des revendications précédentes, **caractérisé en ce qu'**au moins un des capteurs radar (22) est monté mobile, de préférence déplaçable et/ou pouvant pivoter, de préférence motorisé.

6. Dispositif de pulvérisation selon l'une des revendications précédentes, **caractérisé en ce que** des modules de capteur, comportant au moins un capteur radar (22), de préférence plusieurs capteurs radar (22), sont conçus, les modules de capteur pouvant être couplés les uns aux autres pour la surveillance de cônes de pulvérisation (20) supplémentaires, de préférence mécaniquement et/ou au moyen d'un système de bus électronique.

7. Dispositif de pulvérisation selon l'une des revendications précédentes, **caractérisé en ce qu'**une surveillance séparée des cônes de pulvérisation (20) de chaque buse de pulvérisation (15) individuelle ou d'au moins des buses de pulvérisation (15) d'une buse multiple est effectuée.

8. Procédé de surveillance du liquide de pulvérisation, en particulier d'eau, sortant d'au moins une buse de pulvérisation (15), de préférence d'une pluralité de buses de pulvérisation (15), d'un dispositif de pulvérisation (10), de préférence selon l'une des revendications précédentes, en particulier à des fins agricoles, le liquide de pulvérisation pouvant, en tant que liquide porteur, être mélangé avec au moins un agent actif, **caractérisé en ce que** le liquide de pulvérisation sortant sous forme de cône de pulvérisation (20) de l'au moins une buse de pulvérisation (15) est surveillé au moyen de radar au moyen d'au moins un capteur radar, des paramètres des signaux radar de l'au moins un capteur radar (22) étant évalués pour la surveillance du fonctionnement de l'au moins une buse de pulvérisation (15) et/ou de l'épandage du liquide de pulvérisation, au moyen d'une unité d'évaluation électronique, la fréquence Doppler et/ou l'amplitude étant prises en compte.

9. Procédé selon la revendication 8, **caractérisé en ce que** l'au moins un cône de pulvérisation (15) est surveillé au moyen d'au moins un capteur radar (22), en particulier concernant l'existence du cône de pulvérisation (15), sa forme, la distribution spatiale du liquide de pulvérisation et/ou le débit.

10. Procédé selon la revendication 8, **caractérisé en ce que** plusieurs des cônes de pulvérisation (20) sont surveillés au moyen d'un capteur radar (22) commun, le capteur radar (22) étant de préférence bougé, en particulier pivoté et/ou déplacé, pour la surveillance de différentes buses de pulvérisation (15).

11. Procédé selon l'une des revendications 8 ou 10, **caractérisé en ce que** chaque cône de pulvérisation (20) est surveillé avec un capteur radar (22) séparé.

12. Procédé selon l'une des revendications 8 à 11, **caractérisé en ce que** des paramètres du cône de pulvérisation (20), en particulier du liquide sortant de la buse de pulvérisation (15) ou des gouttes de liquides sortantes, sont surveillés, de préférence au moins la distribution des vitesses et/ou la distribution spatiale du liquide de pulvérisation et/ou le tracé des trajectoires de vol.

13. Utilisation d'un module de capteurs pour la surveillance du liquide de pulvérisation sortant d'au moins une buse de pulvérisation (15) d'un dispositif de pulvérisation (10) à des fins agricoles, pour la vaporisation de liquides en tant que cônes de pulvérisation (20), le module de capteurs étant conçu de telle façon que les modules de capteurs peuvent être couplés les uns aux autres, de préférence mécaniquement et/ou au moyen d'un système de bus électronique et l'au moins un capteur radar (22) étant prévu pour la surveillance des paramètres de l'au moins un cône de pulvérisation (20), en particulier du liquide de pulvérisation sortant de la buse de pulvérisation (15) ou des jets de liquide (21) et/ou gouttes de liquides sortants, de préférence d'au moins la distribution des vitesses et/ou de la distribution spatiale et/ou du tracé des trajectoires de vol des jets de liquide (21) et/ou des gouttes de liquide, des paramètres des signaux radar de l'au moins un capteur radar (22) étant évalués pour la surveillance du fonctionnement de l'au moins une buse de pulvérisation (15) et/ou de l'épandage du liquide de pulvérisation, au moyen d'une unité d'évaluation électronique, la fréquence Doppler et/ou l'amplitude étant prises en compte.
